# EUROPÄISCHE PATENTSCHRIFT

(11) **EP 1 750 879 B1**
(45) Veröffentlichungstag und Bekanntmachung des Hinweises auf die Patenterteilung: **02.01.2013**
(21) Anmeldenummer: 04790225.9
(22) Anmeldetag: 08.10.2004
(51) Int. Cl.: B23D 43/06, B23D 37/00

(54) **VERFAHREN UND VORRICHTUNG ZUM SPANENDEN BEARBEITEN ROTATIONSSYMMETRISCHER FLÄCHEN EINES WERKSTÜCKES**
METHOD AND DEVICE FOR MACHINING ROTATIONALLY SYMMETRICAL SURFACES OF A WORKPIECE
PROCEDE ET DISPOSITIF POUR USINER, PAR ENLEVEMENT DE MATIERE, DES SURFACES A SYMETRIE DE REVOLUTION D'UNE PIECE

(30) Priorität: 28.05.2004 DE 102004026675
(43) Veröffentlichungstag der Anmeldung: 14.02.2007
(73) Patentinhaber: J.G. Weisser Söhne GmbH & Co. KG, 78112 St. Georgen (DE)
(72) Erfinder: KUMMER, Norbert, 78112 St. Georgen (DE)
(74) Vertreter: Maucher, Wolfgang
(86) Internationale Anmeldenummer: PCT/EP2004/011292
(87) Internationale Veröffentlichungsnummer: WO 2005/118194

(56) Entgegenhaltungen:
- DE-A1- 3 525 514
- DE-A1- 10 144 649
- DE-A1- 19 749 939
- US-A- 2 090 119
- US-A- 3 841 200
- US-A- 4 285 618

## Beschreibung

Die Erfindung betrifft ein Verfahren zum spanenden Drehearbeiten rotationssymmetrischer Flächen eines Werkstückes gemäß dem Oberbegriff des Anspruchs 1 sowie eine Vorrichtung zum Durchführen dieses Verfahrens gemäß dem Oberbegriff des Anspruchs 11.

Die spanende Bearbeitung rotationssymmetrischer Flächen eines Werkstückes erfolgt herkömmlicherweise durch Drehen. Bei der Drehbearbeitung wird das Werkstück rotierend um die als Z-Achse bezeichnete Werkstückrotationsachse angetrieben. Das Werkzeug wird radial in der X-Achse auf die Schnitttiefe zugestellt. Während des Drehens wird das Werkzeug mit einer zur Z-Achse parallelen Vorschubbewegung bewegt. Bei dieser Drehbearbeitung erhält die erzeugte rotationssymmetrische Fläche eine schraubenlinienförmige Oberflächenstruktur, die als Drall bezeichnet wird. Ein solcher Drall kann z. B. nachteilig sein, wenn Wellenaustrittsstellen von Motoren, Getrieben und sonstigen Maschinen im Bereich dieser Oberflächen durch radial anliegende Dichtringe abgedichtet werden sollen. Je nach Drehrichtung der Welle kann durch den Drall Öl an der Dichtstelle nach außen oder Schmutz oder Wasser nach innen gefördert werden.

Es besteht somit bei der Herstellung rotationssymmetrischer Oberflächen von Werkstücken häufig die Forderung nach Drallfreiheit. Weiter werden Forderungen an die Oberflächenrauheit gestellt. Eine Obergrenze der Rauheit ergibt sich aus der Forderung, dass die anliegende Dichtung möglichst wenig verschleißen soll. Eine untere Grenze der Rauheit ergibt sich aus der Forderung, dass Öl und Schmiermittel an der Oberfläche haften sollen, um eine Schmierung der Dichtung zu gewährleisten und ein Heißlaufen der Dichtung zu verhindern.

Um eine diesen Forderungen entsprechende rotationssymmetrische Fläche möglichst ohne Drall und mit einer regellos orientierten Feinstruktur-Rauhigkeit zu erzeugen, werden daher Bearbeitungsverfahren wie z. B. Schleifen, Bandschleifen, Schwingschleifen, Hartdrehen oder Glattwalzen eingesetzt. Diese Bearbeitungen erfordern einen zusätzlichen Bearbeitungsschritt, der die Fertigung aufwendig macht, da in der Regel eine zusätzliche Maschine benötigt wird und das Werkstück umgespannt werden muss.

Eine drallfreie Oberfläche kann auch durch Einstechdrehen erzeugt werden. Hier erfolgt die Vorschubbewegung des Werkzeuges nur radial in der X-Achse, ohne dass ein Drall erzeugender Vorschub in der Z-Richtung erfolgt. Die Schneide muss hierbei jedoch so breit sein wie die axiale Breite der herzustellenden Oberfläche. Da die Schneide über ihre gesamte axiale Breite im Wirkeingriff ist, drehen insbesondere bei gehärteten Werkstücken hohe Schnittkräfte auf, die zu Rattereffekten führen und die Oberflächenqualität herabsetzen.

Weiter ist das Drehräumen bekannt, bei dem das Werkzeug in tangentialer Richtung mit der erforderlichen Vorschubbewegung an dem mit hoher Drehzahl rotierenden Werkstück entlang bewegt wird. Es sind mehrere Werkzeuge vorgesehen, die aufeinander folgend mit zunehmender Schnitttiefe in Eingriff kommen. Die jeweilige Schnitttiefe wird dabei durch die Vorschubbewegung erreicht. Die Werkzeuge sind an einem linearen Werkzeugträger oder auf dem Umfang eines scheibenförmigen Werkzeugträgers angeordnet. Auch hier treten hohe Schnittkräfte auf. Sind die Schneiden schräg in Bezug auf die Vorschubbewegung angeordnet, so entstehen auch hier Drallstrukturen, da die tangentiale Bewegung zu einer im Verlauf des Vorschubs zunehmenden Schnitttiefe der Schneide führt. Außerdem werden durch die in sich geraden Schneiden keine zylindrischen Oberflächen erzeugt.

Weiter ist das Drehfräsen bekannt, bei welchem das Werkstück mit geringer Drehzahl angetrieben wird, während ein Fräswerkzeug mit hoher Drehzahl die Schnittbewegung ausführt. Die bei der Fräsbearbeitung typische Spanbildung, sogenannte Kommaspäne steht der Erzeugung einer den oben genannten Forderungen genügenden Oberfläche entgegen.

Schließlich ist es aus der DE 199 63 897 A1 bekannt, drallfreie rotationssymmetrische Oberflächen mit dem sogenannten Tangentialdrehen zu erzeugen. Das Werkstück wird zur Erzeugung der Schnittbewegung rotierend angetrieben. Ein Werkzeug mit in sich gerader Schneide wird mit einer linearen Vorschubbewegung in einer zu dem Werkstück tangentialen Ebene bewegt. Entweder verläuft die Vorschubbewegung in einer zur Werkstückrotationsachse senkrechten Ebene und die Schneide ist zu der Vorschubbewegung schräggestellt oder die Vorschubbewegung verläuft in einer zur Werkstückrotationsachse schräggestellten Ebene und die Schneide ist senkrecht zur Vorschubbewegung angeordnet. Durch diese Schrägstellung der Schneide wandert beim Vorschub des Werkzeuges die Wirkstelle zwischen der Schneide und dem Werkstück entlang der Schneide. Dieses bekannte Verfahren kann nicht auf einer einfachen Drehmaschine durchgeführt werden, die nur einen Vorschub in X- und Z-Richtung aufweist. Es ist ein zusätzlicher Linearantrieb für das Werkzeug in der tangentialen Y-Achse erforderlich. Auf Grund der tangentialen Vorschubbewegung des Werkzeuges ist zu dem nur eine Bearbeitung von rotationssymmetrischen Außenflächen des Werkstückes möglich. Für ein solches Verfahren beschreibt undem die DE 10144649, die den Oberbegriff des Ansprüche 1 und 11 bildet, auch die Verwendung einer bogenförmigen Schneidkante.

Der Erfindung liegt die Aufgabe zu Grunde, ein Verfahren und eine Vorrichtung zum spanenden Bearbeiten rotationssymmetrischer Flächen eines Werkstückes zur Verfügung zu stellen, welches in einfacher Weise eine drallfreie Bearbeitung mit hoher Zerspanungsleistung ermöglicht.

Diese Aufgabe wird erfindungsgemäß gelöst durch ein Verfahren mit den Merkmalen des Anspruchs 1 bzw. durch eine Vorrichtung mit den Merkmalen des Anspruchs 11.

Vorteilhafte Ausführungen und Weiterbildungen der Erfindung sind in den jeweils rückbezogenen Unteransprüchen angegeben.

Der wesentliche Gedanke der Erfindung besteht darin, die rotationssymmetrische Fläche eines Werkstückes durch eine Drehbearbeitung zu erzeugen, wobei für diese Drehbearbeitung eine Schneide verwendet wird, deren Form der Schneide eines Walzenfräsers entspricht. Die Hauptbewegung der spanenden Bearbeitung, d. h. die Schnittbewegung wird durch die Rotation des Werkstückes bewirkt. Die Schneide des Werkzeuges wird mit einer kreisbogenförmigen Vorschubbewegung bewegt. Die Rotationsachse, um welche sich die Schneide des Werkzeuges kreisbogenförmig bewegt, fällt mit der Achse der Schraubenlinie der Schneide zusammen. Während der Drehbearbeitung rotiert das Werkstück mit der erforderlichen Schnittgeschwindigkeit, während das Werkzeug mit der wesentlichen geringeren Vorschubgeschwindigkeit um einen Bogenwinkel geschwenkt wird, der dem Bogenwinkel entspricht, über welchen sich die schraubenlinienförmige Schneide erstreckt. Bei diesem Bearbeitungsvorgang kommt somit die Schneide jeweils nur über einen Längenbereich in Wirkeingriff mit dem Werkstück für die Drehbearbeitung. Auf Grund der kreisbogenförmigen Schwenkbewegung der Schneide wandert diese Wirkstelle jedoch während einer Schwenkbewegung des Werkzeuges in axialer Richtung über die gesamte axiale Breite der Schneide. Da die Schneide nur in einem begrenzten Bereich der Wirkstelle in Eingriff kommt, treten auch bei einer größeren Breite der Schneide nur relativ geringe Schnittkräfte auf. Auch bei gehärteten Werkstücken ist eine gute Oberflächenqualität zu erzielen.

Da das Werkzeug während der Bearbeitung nur um eine feststehende Werkzeugrotationsachse geschwenkt wird, ist kein zusätzlicher linearer Vorschub des Werkzeuges in der Y-Achse notwendig. Das Werkzeug kann vorzugsweise in den Werkzeugträger einer herkömmlichen Drehmaschine mit X- und Z-Achse eingesetzt werden. Drehmaschinen dieser Art haben häufig einen Werkzeughalter mit Antrieb, der häufig in einem Werkzeugrevolver angeordnet ist, um auch Bohr- oder Fräsarbeiten durchführen zu können. In diesem Falle kann erfindungsgemäß das Werkzeug in einen solchen Werkzeughalter mit Antrieb eingesetzt werden, wobei ein Untersetzungsgetriebe vorgesehen ist, um die Drehzahl des Antriebs auf die erfindungsgemäß geringe Schwenkgeschwindigkeit des Werkzeugs herabzusetzen.

Erfindungsgemäß kann das Werkzeug am Außenumfang des Werkstückes angreifen, um eine rotationssymmetrische Außenfläche des Werkstückes zu erzeugen. Da die Schneide erfindungsgemäß auf einem Kreisbogen bewegt wird, kann auch eine Innenfläche des Werkstückes hergestellt werden. Hierzu ist es nur notwendig, dass der Radius der kreisbogenförmigen Vorschubbewegung der Schneide kleiner ist als der Radius der herzustellenden rotationssymmetrischen Innenfläche. Verläuft die Schraubenlinie der Schneide des Werkzeuges auf einer zylindrischen Fläche und verläuft die Werkzeugrotationsachse parallel zur Werkstückrotationsachse, so können zylindrische Außenflächen bzw. Innenflächen des Werkstückes erzeugt werden. Es können auch konische rotationssymmetrische Außen- und Innenflächen des Werkstückes erzeugt werden. Hierzu kann die Schneide so geformt sein, dass ihre Schraubenlinie auf einer konischen Mantelfläche verläuft, wobei die Werkzeugrotationsachse parallel zur Werkstückrotationsachse liegt. Alternativ kann eine Schneide verwendet werden, deren Schraubenlinie auf einer Zylinderfläche verläuft, wenn die Werkzeugrotationsachse unter dem zu erzeugenden Konuswinkel gegen die Werkstückrotationsachse geneigt angeordnet wird.

Bei einer Anordnung der Werkzeugrotationsachse senkrecht zur Werkstückrotationsachse können auch Planflächen des Werkstückes bearbeitet werden. Bei einer Schneide in Form einer zylindrischen Schraubenlinie ergibt sich hierbei eine zur Werkstückrotationsachse senkrechte Planfläche. Bei einer Schneide in Form einer konischen Schraubenlinie ergibt sich eine konische Planfläche.

Die Steigung der Schraubenlinie, in welcher die Schneide verläuft, kann zwischen 0° und 90° liegen. Vorteilhaft ist eine Steigung zwischen 15° und 45°. Die Steigung kann dabei sowohl mit positivem Steigungswinkel als auch mit negativem Steigungswinkel ausgebildet sein, d. h. die Schraubenlinie der Schneide kann in Richtung der Schwenkbewegung des Werkzeuges oder entgegen der Schwenkbewegung des Werkzeuges verlaufen. Bei positiver Steigung und bei negativer Steigung wandert dementsprechend die Wirkstelle zwischen Schneide und Werkstück bei der Schwenkbewegung der Schneide in der einen oder in der entgegengesetzten anderen axialen Richtung. Dadurch wirkt auch der Schnittdruck der spanenden Bearbeitung in der einen oder der anderen axialen Richtung, so dass eine Anpassung an die Werkstückspannung möglich ist.

Bei der erfindungsgemäßen Bearbeitung ergibt sich eine axiale Breite der bearbeiteten Oberfläche des Werkstückes, die der axialen Breite der Schneide des Werkzeuges entspricht. Soll eine größere axiale Breite des Werkstückes bearbeitet werden, so kann zusätzlich ein Vorschub des Werkzeuges in Z-Achse, d. h. in der Richtung der Rotationsachse des Werkstückes überlagert werden.

In einer einfachen Ausführung kann das Werkzeug an einem um die Werkzeugrotationsachse schwenkbaren Arm angeordnet sein. Der Schwenkwinkel des Armes muss dabei zumindest dem Bogenwinkel entsprechen, um welchen die Schneide bei der Vorschubbewegung bewegt wird. Vorzugsweise wird der Schwenkwinkel des Werkzeuges jedoch in beiden Richtungen um einen Winkelbetrag vergrößert, damit die Schneide bei der radialen Zustellung vor der Spanabnahme nicht mit dem Werkstück kollidiert und nach der Spanabnahme sicher aus dem Schnitt herauskommen kann. Diese zusätzliche Winkelbereiche hängen von der Schnitttiefe und den Radien des Werkstückes und des kreisbogenförmigen Vorschubs ab.

In einer bevorzugten Ausführung ist ein scheibenförmiger Werkzeugträger vorgesehen, der um die Werkzeugrotationsachse drehbar ist. Am Umfang des Werkzeugträgers können ein oder mehrere im Umfang versetzte Werkzeuge angeordnet sein. Sind mehrere Werkzeuge vorgesehen, so können diese gleich ausgebildet sein, so dass beim Verschleiß eines Werkzeuges der Werkzeugträger jeweils auf ein neues Werkzeug weitergeschaltet werden kann. Es ist auch möglich, unterschiedlich geformte Werkzeuge auf dem Werkzeugträger anzubringen, die dann wahlweise eingesetzt werden können, um unterschiedliche Oberflächen zu erzeugen. Auch wenn mehrere Werkzeuge am Umfang der Werkzeugträgerscheibe angeordnet sind, kommt während des Bearbeitungsvorgangs jedoch jeweils nur eines dieser Werkzeuge zum Einsatz. Der Werkzeugträger wird während des Bearbeitungsvorgangs auch nur um einen solchen Bogenwinkel gedreht, der dem Bogenwinkel entspricht, über welchen sich die jeweils zum Einsatz kommende Schneide des Werkzeugs erstreckt.

Im Folgenden wird die Erfindung anhand von in der Zeichnung dargestellten Ausführungsbeispielen näher erläutert. Es zeigen
- Figur 1: das Prinzip der erfindungsgemäßen spanenden Bearbeitung einer Außenfläche eines Werkstückes,
- Figur 2: eine entsprechende Darstellung der Bearbeitung einer Innenfläche eines Werkstückes,
- Figur 3: das Werkzeug der Figuren 1 und 2 mit positiver Steigung der Schneide (Figur 3a) bzw. mit negativer Steigung der Schneide (Figur 3b),
- Figur 4: die spanende Bearbeitung einer Planfläche eines Werkstückes,
- Figur 5: in perspektivischer Darstellung eine in einen Standard-Werkzeugrevolver einsetzbare Antriebseinheit für ein erfindungsgemäßes Werkzeug und
- Figur 6: einen mit der Antriebseinheit der Figur 5 verwendbaren Werkzeugträger.

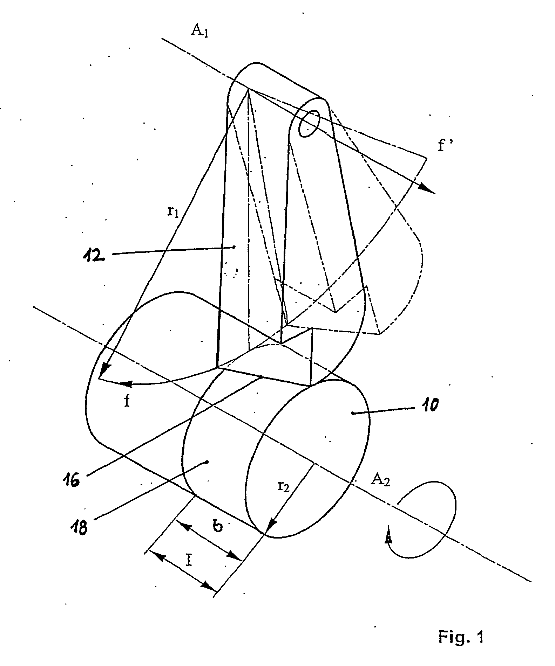

In Figur 1 ist schematisch die spanabhebende Drehbearbeitung einer rotationssymmetrischen Außenfläche eines Werkstückes 10 dargestellt. Das Werkstück 10 wird in einer herkömmlichen Drehmaschine gespannt und um seine Längsachse A₂ drehend angetrieben. Die angetriebene Rotation des Werkstückes 10 stellt die Hauptbewegung der spanenden Bearbeitung dar, bewirkt somit die Schneidbewegung.

Ein Werkzeug 12 ist um eine Werkzeugrotationsachse A₁ schwenkbar gelagert. Die Werkzeugrotationsachse A₁ verläuft in dem Ausführungsbeispiel der Figur 1 parallel zu der Werkstückrotationsachse A₂. In der schematischen Darstellung der Figur 1 besteht das Werkzeug 12 aus einem um die Werkzeugrotationsachse A₁ angetriebenen schwenkbar gelagerten Werkzeugträgerarm 14, an dessen freiem Ende eine Schneide 16 angeordnet ist. Die Schneidkante der Schneide 16 ist so geformt, dass sie einen Abschnitt einer Schraubenlinie bildet, die in der Mantelfläche eines geraden Kreiszylinders mit dem Radius r₁ und der Werkzeugrotationsachse A₁ als Achse verläuft. Die Steigung der Schraubenlinie, die von der Schneide 16 gebildet wird, weist einen Winkel β auf, der zwischen 0° und 90° liegt und vorzugsweise zwischen 15° und 45° beträgt. Der Steigungswinkel β kann dabei positiv oder negativ sein, entsprechend der Schraubenlinie eines Rechtsgewindes oder eines Linksgewindes. Die Schneide 16 weist eine Breite b in axialer Richtung, d. h. in Richtung der Werkzeugrotationsachse A₁ auf. Auf Grund der schraubenlinienförmigen Ausbildung ist jedoch die Länge der Schneidkante der Schneide 16 entsprechend dem Steigungswinkel länger. Auf Grund der schraubenlinienförmigen Ausbildung der Schneide 16 ist deren Schneidkante nicht in sich geradlinig, sondern nach außen ballig gewölbt.

Um eine rotationssymmetrische zylindrische Außenfläche 18 des Werkstückes 10 zu erzeugen, wird das Werkzeug 12 zunächst aus seiner in Figur 1 strichpunktiert gezeichneten Ausgangsstellung, die einen gewissen Winkelbetrag vor der eigentlich notwendigen Winkelstellung (wie oben beschrieben) steht, radial zugestellt, bis es die gewünschte Schnitttiefe erreicht hat, die dem Radius r₂ der herzustellenden Oberfläche des Werkstückes 10 entspricht. Nun erfolgt die Drehbearbeitung mit konstanter Schnitttiefe, bei welcher das Werkstück 10 mit der Schnittgeschwindigkeit um die Werkstückrotationsachse A₂ - in Figur 1 im Uhrzeigersinn - angetrieben gedreht wird. Während dieser Drehbearbeitung wird das Werkzeug 12 auf einer kreisbogenförmigen Vorschubbahn f mit dem Radius r₁ bewegt. Die Vorschubgeschwindigkeit in der Vorschubrichtung f ist dabei wesentlich geringer als die Schnittgeschwindigkeit des rotierenden Werkstückes 10. Das Werkzeug 12 wird in der Vorschubrichtung f um einen Kreisbogenwinkel bewegt, der dem von der Schneide 16 in Umfangsrichtung überdeckten Kreisbogenwinkel entspricht. Dadurch wandert die Wirkstelle, in welcher die Schneide 16 mit dem Werkstück 10 in schneidenden Eingriff kommt, entlang der Schneide 16 von dem in Vorschubrichtung f vorderen zu dem in dieser Vorschubrichtung f hinteren Ende der Schneide 16, d. h. in der Darstellung der Figur 1 an der Schneide 16 in axialer Richtung von links nach rechts. Auf diese Weise wird eine spanabhebende Drehbearbeitung des Werkstückes 10 über eine axiale Breite 1 bewirkt, die der axialen Breite b der Schneide 16 entspricht. Es wird somit eine drallfreie Außenfläche 18 mit dem Radius r₂ und der axialen Breite 1 hergestellt.

Soll eine Außenfläche 18 erzeugt werden, deren axiale Breite 1 größer ist als die axiale Breite b der Schneide 16, so kann dem Werkzeug 12 zusätzlich ein Vorschub f' in Z-Richtung, d. h. in Richtung der Werkzeugrotationsachse A₁, erteilt werden.

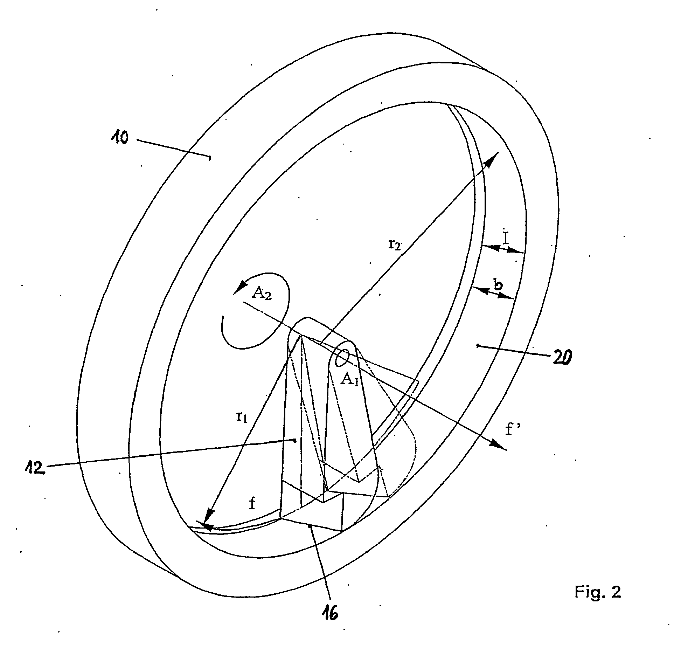

In Figur 2 ist in einer entsprechenden schematischen Darstellung die Bearbeitung einer rotationssymmetrischen Innenfläche 20 eines Werkstückes 10 dargestellt.

Das Werkzeug 12 wird in den zu bearbeitenden inneren Hohlraum des Werkstückes 10 gebracht, wobei die Werkzeugrotationsachse A₁ parallel zu der Werkstückrotationsachse A₂ verläuft. Der Radius r₁, d. h. der Radius der kreisbogenförmigen Vorschubbewegung f der Schneide 16 ist dabei kleiner als der Radius r₂ der zu erzeugenden rotationssymmetrischen Innenfläche 20. Dementsprechend ist die Werkzeugrotationsachse A₁ gegenüber der Werkstückrotationsachse A₂ um die Differenz der Radien r₂ und r₁ achsparallel versetzt.

Zunächst wird auch hier das Werkzeug 12 um einen Eintrittswinkel gegenüber der Bearbeitungsposition in die strichpunktiert gezeichnete Ausgangsstelle geschwenkt. Das Werkzeug 12 wird dann für die Drehbearbeitung radial zugestellt, so dass der Drehbearbeitungsvorgang mit entlang der Schneide 16 wanderndem Wirkpunkt in der oben beschriebenen Weise durchgeführt werden kann. Da in dem Ausführungsbeispiel der Figur 2 die Bearbeitung an der Innenfläche 20 erfolgt, muss selbstverständlich für den spanabhebenden Schnitt das Werkstück 10 im Gegenuhrzeigersinn um die Werkstückrotationsachse A₂ angetrieben werden, wenn das Werkzeug 12 um die Werkzeugrotationsachse A₁ im Uhrzeigersinn geschwenkt wird. Nach Beendigung des spanabhebenden Schnittes wird das Werkzeug 12 vorzugsweise noch über seine Endstellung hinausgeschwenkt, um für das Abnehmen des Werkstückes 10 sicher aus dem Schnitt zu kommen.

Auch hier wird durch die Schwenkbewegung des Werkzeuges 12 um einen dem Kreisbogenwinkel der Schneide 16 entsprechenden Vorschub f eine rotationssymmetrisch zylindrische Innenfläche 20 erzeugt, deren axiale Breite 1 der axialen Breite b der Schneide 16 entspricht. Für die Bearbeitung einer größeren axialen Breite der Innenfläche 20 kann dem Werkzeug 12 zusätzlich ein Vorschub f' in Richtung der Z-Achse, d. h. in Richtung der Werkstückrotationsachse A₂ erteilt werden.

Aus den schematischen Darstellungen der Figuren 1 und 2 ist erkennbar, dass erfindungsgemäß nicht nur zylindrische Flächen mit konstantem Durchmesser hergestellt werden können, sondern auch äußere und innere Konusflächen. Hierzu bestehen zwei alternative Möglichkeiten.

In einer Ausführung wird die Werkzeugrotationsachse A₁ parallel zur Werkstückrotationsachse A2 ausgerichtet, wie dies in den Figuren 1 und 2 dargestellt ist. Die Schneide 16 ist dabei jedoch so geformt, dass sie nicht auf der Mantelfläche eines Zylinders mit konstantem Durchmesser verläuft, sondern die Form einer konischen Schraubenlinie aufweist.

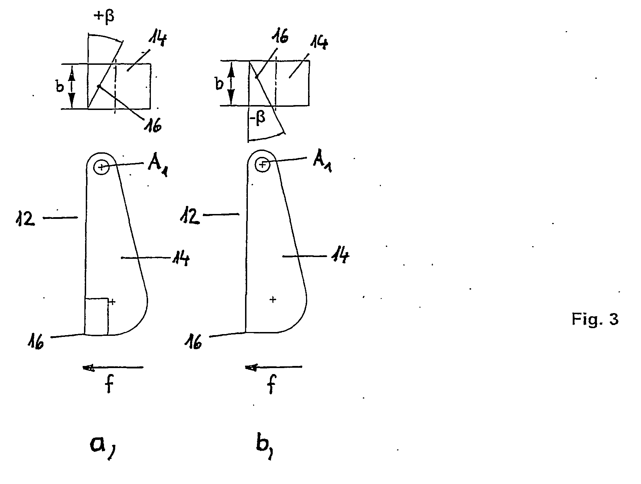

In einer alternativen Ausführung kann ein Werkzeug 12 verwendet werden, dessen Schneide 16 wie im Ausführungsbeispiel der Figuren 1 bis 3 die Form einer Schraubenlinie mit konstantem Durchmesser hat. Die Werkzeugrotationsachse A₁ wird jedoch entsprechend dem zu erzeugenden Konuswinkel gegen die Werkstückrotationsachse A₂ geneigt.

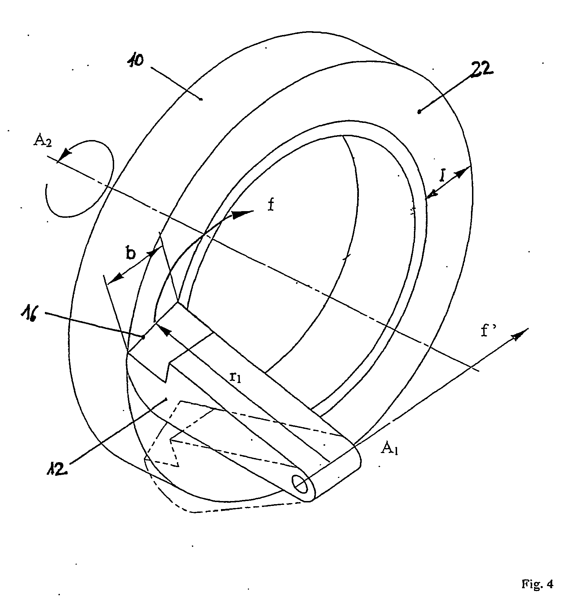

Ist die Werkzeugrotationsachse A₁ um 90° gegenüber der Werkstückrotationsachse A₂ geneigt, so dass sich insbesondere die Werkzeugrotationsachse A₁ und die Werkstückrotationsachse A₂ senkrecht schneiden, so können auch Planflächen 22 des Werkstückes 10 bearbeitet werden, wie dies in Figur 4 schematisch dargestellt ist.

Schneiden sich die Werkzeugrotationsachse A₁ und die Werkstückrotationsachse A₂ rechtwinklig, so wird durch die Schneide 16 mit der axialen Breite b eine zur Werkstückrotationsachse A₂ senkrechte kreisringförmige Planfläche der radialen Breite 1 erzeugt. Eine größere radiale Breite 1 der Planfläche 22 kann durch einen zusätzlichen Vorschub f' des Werkzeuges 12 in Richtung der Werkzeugrotationsachse A₁ hergestellt werden.

Ist die Werkzeugrotationsachse A₁ windschief in Bezug auf die Werkstückrotationsachse A₂ angeordnet, so kann auch hier eine konische Planfläche 22 erzeugt werden. Alternativ kann eine konische Planfläche 22, wie oben beschrieben, durch entsprechende Formgebung der Schneide erzeugt werden.

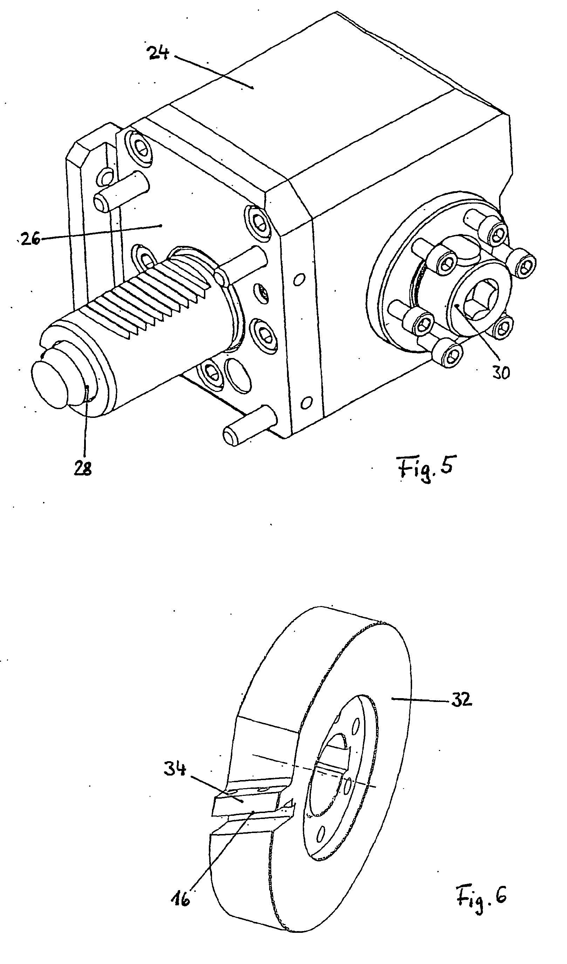

In den Figuren 5 und 6 ist ein konkretes Ausführungsbeispiel der Erfindung dargestellt.

Eine herkömmliche Drehmaschine weist einen Standard-Werkzeugrevolver mit wenigstens einer angetriebenen Werkzeugaufnahme für einen Fräser oder Bohrer auf. In diese angetriebene Aufnahme wird eine in Figur 5 dargestellte Antriebseinheit 24 eingesetzt. Die Antriebseinheit 24 wird dabei mit einem Anbauflansch 26 fest an dem Werkzeugrevolver montiert und mit einer Welle 28 mit dem Antrieb des Werkzeugrevolvers gekuppelt. Die Drehzahl des Antriebs wird über ein in der Antriebseinheit 24 angeordnetes Getriebe z. B. im Verhältnis 80:1 untersetzt. Auf die mit der untersetzten Drehzahl angetriebene Ausgangswelle 30 wird ein in Figur 6 dargestellter scheibenförmiger Werkzeugträger 32 drehfest montiert. Der Werkzeugträger 32 trägt an seinem Umfang das Werkzeug 12, welches vorzugsweise als auswechselbare Werkzeugkassette 34 ausgebildet ist.

Es ist ohne Weiteres ersichtlich, dass über den Umfang des scheibenförmigen Werkzeugträgers 32 verteilt auch mehrere Werkzeuge 12 angeordnet werden können. Diese Werkzeuge können identisch ausgebildet sein, so dass bei Verschleiß eines Werkzeugs das folgende Werkzeug zum Einsatz kommen kann. Ebenso ist es möglich, unterschiedlich geformte Werkzeuge 12 am Umfang des Werkzeugträgers 32 anzuordnen, die alternativ eingesetzt werden, um unterschiedliche Oberflächen zu bearbeiten. Diese unterschiedliche Werkzeuge können beispielsweise unterschiedliche Steigungen aufweisen, positive oder negative Steigungen aufweisen oder unterschiedlich geformten Schraubenlinien entsprechen.

### Bezugszeichenliste

- 10: Werkstück
- 12: Werkzeug
- 14: Werkzeugträgerarm
- 16: Schneide
- 18: Außenfläche
- 20: Innenfläche
- 22: Planfläche
- 24: Antriebseinheit
- 26: Anbauflansch
- 28: Welle
- 30: Ausgangswelle
- 32: Werkzeugträger
- 34: Werkzeugkassette

- A₁: Werkzeugrotationsachse
- A₂: Werkstückrotationsachse
- b: axiale Breite der Schneide
- β: Steigungswinkel
- r₁: Radius des Werkzeugs
- r₂: Radius der Oberfläche des Werkstückes
- f: Vorschub
- f': Vorschub in Z-Achse
- 1: Breite der Oberfläche

## Patentansprüche

1. Verfahren zum spanenden Drehbearbeiten rotationssymmetrischer Flächen (18, 20, 22) eines Werkstückes (10), bei welchem das Werkstück (10) zur Erzeugung der Schnittbewegung mit der Schnittgeschwindigkeit rotierend angetrieben wird, bei welchem wenigstens ein Werkzeug (12) mit einer Schneide (16) mit dem Werkstück (10) in schneidenden Eingriff kommt und bei welchem die Schneide (16) in Bezug auf das Werkstück (10) mit einer Vorschubbewegung, deren Vorschubgeschwindigkeit wesentlich geringer als die Schnittgeschwindigkeit ist, in der Weise bewegt wird, dass die Wirkstelle zwischen Schneide (16) und Werkstück (10) entlang der Schneide (16) wandert, **dadurch gekennzeichnete dass** die Schneide (16) mit einer kreisbogenförmigen Vorschubbewegung (f) um eine Werkzeugrotationsachse (A₁) bewegt wird und dass die Schneide (16) die Form einer zur Werkzeugrotationsachse (A₁) koaxialen Schraubenlinie aufweist.

2. Verfahren nach Anspruch 1, **dadurch gekennzeichnet, dass** das Werkzeug (12) zusätzlich um einen Eintrittswinkel für die radiale Zustellung der Schneide (16) und um einen Austrittswinkel geschwenkt wird, damit die Schneide (16) bei der radialen Zustellung vor der Spanabnahme nicht mit dem Werkstück (10) kollidiert und nach der Spanabnahme sicher aus dem Schnitt herauskommt.

3. Verfahren nach Anspruch 1 oder 2, **dadurch gekennzeichnet, dass** das Werkzeug (12) während der Drehbearbeitung mit seiner wesentlich geringeren Vorschubgeschwindigkeit um einen Bogenwinkel geschwenkt wird, der dem Bogenwinkel entspricht, über welchen sich die schraubenlinienförmige Schneide (16) erstreckt, und dass die Wirkstelle der Schneide (16) aufgrund der kreisbogenförmigen Schwenkbewegung der Schneide (16) während einer Schwenkbewegung des Werkzeugs (12) in axialer Richtung über die Breite der Schneide (16) wandert.

4. Verfahren nach Anspruch 1,
**dadurch gekennzeichnet, dass** zur Erzeugung geradzylindrischer Flächen die Werkzeugrotationsachse und die Werkstückrotationsachse parallel zueinander angeordnet sind und dass die Schneide die Form einer Schraubenlinie aufweist, die in der Mantelfläche eines Zylinders verläuft.

5. Verfahren nach Anspruch 1,
**dadurch gekennzeichnet, dass** zur Erzeugung von konischen Flächen die Werkzeugrotationsachse und die Werkstückrotationsachse unter einem Winkel zwischen 0° und 90° zueinander angeordnet sind und dass die Schneide die Form einer Schraubenlinie aufweist, die in der Mantelfläche eines Zylinders verläuft.

6. Verfahren nach Anspruch 1,
d ad u r c h **gekennzeichnet**, dass zur Erzeugung von konischen Flächen die Werkzeugrotationsachse und die Werkstückrotationsachse parallel zueinander verlaufen und dass die Schneide die Form einer Schraubenlinie aufweist, die in der Mantelfläche eines Konus verläuft.

7. Verfahren nach einem der Ansprüche 1 bis 6,
**dadurch gekennzeichnet, dass** das Werkzeug mit der Schneide am Außenumfang des Werkstückes angreift.

8. Verfahren nach einem der Ansprüche 1 bis 6,
**dadurch gekennzeichnet, dass** das Werkzeug mit der Schneide an einem Innenumfang des Werkstückes angreift.

9. Verfahren nach Anspruch 1,
**dadurch gekennzeichnet, dass** zur Erzeugung von zu der Werkstückrotationsachse senkrechten Planflächen die Werkzeugrotationsachse senkrecht zur Werkstückrotationsachse angeordnet ist.

10. Verfahren nach einem der vorhergehenden Ansprüche,
**dadurch gekennzeichnet, dass** die Steigung der Schraubenlinie der Schneide in Bezug auf die Vorschubrichtung der Schneide einen positiven oder negativen Steigungswinkel aufweist.

11. Vorrichtung zum spanenden Drehbearbeiten rotationssymmetrischer Flächen (18, 20, 22) eines Werkstückes (10), mit einem rotierenden Antrieb des gespannten Werkstückes (10), wobei die Rotation des Werkstückes (10) die Schnittgeschwindigkeit der Bearbeitung bewirkt, mit einem Werkzeug (12) mit einer Schneide (16) und mit einem Vorschub des Werkzeuges (12), dessen Vorschubgeschwindigkeit wesentlich geringer als die Schnittgeschwindigkeit ist und durch welchen die Schneide (16) mit einer entlang der Schneide (16) wandernden Wirkstelle mit dem Werkstück (10) in Eingriff kommt, **dadurch gekennzeichnet, dass** das Werkzeug (12) um eine Werkzeugrotationsachse (A₁) bewegbar ist, so dass die Schneide (16) auf einer kreisbogenförmigen Vorschubbahn (f) bewegt wird, und dass die Schneide (16) die Form einer zur Werkzeugrotationsachse (A₁) koaxialen Schraubenlinie aufweist.

12. Vorrichtung nach Anspruch 11, **dadurch gekennzeichnet, dass** das Werkzeug (12) zusätzlich um einen Eintrittswinkel für die radiale Zustellung der Schneide' (16) und um einen Austrittswinkel schwenkbar ist.

13. Vorrichtung nach Anspruch 11 oder 12, **dadurch gekennzeichnet, dass** das Werkzeug (12) einen um die Werkzeugrotationsachse (A₁) angetriebenen schwenkbar gelagerten Werkzeugarm (16) aufweist, an dessen freiem Ende die Schneide (16) angeordnet ist.

14. Vorrichtung nach Anspruch 11,
**dadurch gekennzeichnet, dass** die Schraubenlinie eine Steigung mit einem Steigungswinkel (β) zwischen 0° und 90°, vorzugsweise zwischen 15° und 45° aufweist.

15. Vorrichtung nach Anspruch 14,
**dadurch gekennzeichnet, dass** der Steigungswinkel (β) in Bezug auf die Vorschubrichtung (f) positiv oder negativ ist.

16. Vorrichtung nach einem der Ansprüche 11 bis 15,
**dadurch gekennzeichnet, dass** die Schneide (16) die Form einer Schraubenlinie aufweist, die in der Mantelfläche eines geraden Kreiszylinders mit konstantem Durchmesser verläuft.

17. Vorrichtung nach einem der Ansprüche 11 bis 15,
**dadurch gekennzeichnet, dass** die Schneide (16) die Form einer Schraubenlinie aufweist, die in der Mantelfläche eines Konus verläuft.

18. Vorrichtung nach einem der Ansprüche 11 bis 16,
**dadurch gekennzeichnet, dass** die Werkzeugrotationsachse (A₁) und die Werkstückrotationsachse (A₂) parallel zueinander verlaufen.

19. Vorrichtung nach einem der Ansprüche 11 bis 17,
**dadurch gekennzeichnet, dass** die Werkzeugrotationsachse (A₁) unter einem Winkel von 0° bis 90° gegenüber der Werkstückrotationsachse (A₂) geneigt ist.

20. Vorrichtung nach einem der Ansprüche 11 bis 19,
**dadurch gekennzeichnet, dass** der Radius (r₁) der kreisbogenförmigen Vorschubbewegung der Schneide (16) kleiner ist als der Radius (r₂) einer zu bearbeitenden Innenoberfläche des Werkstückes (10).

21. Vorrichtung nach einem der Ansprüche 11 bis 20,
**dadurch gekennzeichnet, dass** das Werkzeug (12) mit einer Antriebseinheit (24) in eine angetriebene Werkzeugaufnahme einer Drehmaschine einsetzbar ist.

22. Vorrichtung nach Anspruch 21,
**dadurch gekennzeichnet, dass** die Antriebseinheit (24) ein Untersetzungsgetriebe aufweist.

23. Vorrichtung nach einem der Ansprüche 11 bis 22,
**dadurch gekennzeichnet, dass** wenigstens ein Werkzeug (12) am Umfang eines um die Werkzeugsrotationsachse (A₁) drehbaren kreisscheibenförmigen Werkzeugträgers (32) angeordnet ist.

24. Vorrichtung nach Anspruch 23,
**dadurch gekennzeichnet, dass** das wenigstens eine Werkzeug (12) als auswechselbare Werkzeugkassette (34) ausgebildet ist.

## Claims

1. Method for the chip-removing turning of rotationally symmetrical surfaces (18, 20, 22) of a workpiece (10), in which method the workpiece (10) is driven in rotation so as to generate the cutting movement at the cutting speed, in which method at least one tool (12) comes into cutting engagement, by means of a cutting edge (16), with the workpiece (10), and in which method the cutting edge (16) is moved relative to the workpiece (10) with an advancing movement, the advancing speed of which is significantly lower than the cutting speed, in such a way that the point of engagement between the cutting edge (16) and the workpiece (10) travels along the cutting edge (16), **characterized in that** the cutting edge (16) is moved with a circular-arc-shaped advancing movement (f) about a tool axis of rotation (A₁), and **in that** the cutting edge (16) has the form of a helix which is coaxial with respect to the tool axis of rotation (A₁).

2. Method according to Claim 1, **characterized in that** the tool (12) is additionally pivoted through an entry angle for the radial infeed of the cutting edge (16) and through an exit angle, in order that the cutting edge (16) does not collide with the workpiece (10) during the radial infeed before the chip removal and reliably moves out of the cut after the chip removal.

3. Method according to Claim 1 or 2, **characterized in that**, during the turning, the tool (12) is pivoted with its significantly lower advancing speed through an arc angle which corresponds to the arc angle over which the helical cutting edge (16) extends, and **in that** the point of engagement of the cutting edge (16) travels in the axial direction over the width of the cutting edge (16) owing to the circular-arc-shaped pivoting movement of the cutting edge (16) during a pivoting movement of the tool (12).

4. Method according to Claim 1, **characterized in that**, to generate straight cylindrical surfaces, the tool axis of rotation and the workpiece axis of rotation are arranged parallel to one another, and **in that** the cutting edge has the form of a helix which runs in the lateral surface of a cylinder.

5. Method according to Claim 1, **characterized in that**, to generate conical surfaces, the tool axis of rotation and the workpiece axis of rotation are arranged at an angle of between 0° and 90° with respect to one another, and **in that** the cutting edge has the form of a helix which runs in the lateral surface of a cylinder.

6. Method according to Claim 1, **characterized in that**, to generate conical surfaces, the tool axis of rotation and the workpiece axis of rotation run parallel to one another, and **in that** the cutting edge has the form of a helix which runs in the lateral surface of a cone.

7. Method according to one of Claims 1 to 6, **characterized in that** the tool engages, by means of the cutting edge, on the outer circumference of the workpiece.

8. Method according to one of Claims 1 to 6, **characterized in that** the tool engages, by means of the cutting edge, on an inner circumference of the workpiece.

9. Method according to Claim 1, **characterized in that**, to generate planar surfaces perpendicular to the workpiece axis of rotation, the tool axis of rotation is arranged perpendicular to the workpiece axis of rotation.

10. Method according to one of the preceding claims, **characterized in that** the pitch of the helix of the cutting edge has a positive or negative pitch angle in relation to the advancing direction of the cutting edge.

11. Device for the chip-removing turning of rotationally symmetrical surfaces (18, 20, 22) of a workpiece (10), having a rotary drive for the clamped workpiece (10), wherein the rotation of the workpiece (10) yields the cutting speed of the machining process, having a tool (12) with a cutting edge (16), and having an advancing means for the tool (12), the advancing speed of which is significantly lower than the cutting speed and by means of which the cutting edge (16) comes into engagement with the workpiece (10) at a point of engagement which travels along the cutting edge (16), **characterized in that** the tool (12) is movable about a tool axis of rotation (A₁), such that the cutting edge (16) is moved on a circular-arc-shaped advancing path (f), and **in that** the cutting edge (16) has the form of a helix which is coaxial with respect to the tool axis of rotation (A₁).

12. Device according to Claim 11, **characterized in that** the tool (12) is additionally pivotable through an entry angle for the radial infeed of the cutting edge (16) and through an exit angle.

13. Device according to Claim 11 or 12, **characterized in that** the tool (12) has a tool arm (16) which is mounted so as to be pivotably driven about the tool axis of rotation (A₁) and on the free end of which the cutting edge (16) is arranged.

14. Device according to Claim 11, **characterized in that** the helix has a pitch with a pitch angle (β) of between 0° and 90°, preferably between 15° and 45°.

15. Device according to Claim 14, **characterized in that** the pitch angle (β) is positive or negative in relation to the advancing direction (f).

16. Device according to one of Claims 11 to 15, **characterized in that** the cutting edge (16) has the form of a helix which runs in the lateral surface of a straight circular cylinder of constant diameter.

17. Device according to one of Claims 11 to 15, **characterized in that** the cutting edge (16) has the form of a helix which runs in the lateral surface of a cone.

18. Device according to one of Claims 11 to 16, **characterized in that** the tool axis of rotation (A₁) and the workpiece axis of rotation (A₂) run parallel to one another.

19. Device according to one of Claims 11 to 17, **characterized in that** the tool axis of rotation (A₁) is inclined at an angle of 0° to 90° with respect to the workpiece axis of rotation (A₂).

20. Device according to one of Claims 11 to 19, **characterized in that** the radius (r₁) of the circular-arc-shaped advancing movement of the cutting edge (16) is smaller than the radius (r₂) of an inner surface, which is to be machined, of the workpiece (10).

21. Device according to one of Claims 11 to 20, **characterized in that** the tool (12) can be inserted, with a drive unit (24), into a driven tool receptacle of a turning machine.

22. Device according to Claim 21, **characterized in that** the drive unit (24) has a step-down gearing.

23. Device according to one of Claims 11 to 22, **characterized in that** at least one tool (12) is arranged on the circumference of a circular-disc-shaped tool carrier (32) which is rotatable about the tool axis of rotation (A₁).

24. Device according to Claim 23, **characterized in that** the at least one tool (12) is in the form of an exchangeable tool cassette (34).

## Revendications

1. Procédé pour l'usinage rotatif par enlèvement de matière de surfaces à symétrie de révolution (18, 20, 22) d'une pièce (10), selon lequel la pièce (10) est, afin de produire le mouvement de coupe, entraînée en rotation à la vitesse de coupe, selon lequel au moins un outil (12) doté d'un tranchant (16) entre en engagement coupant avec la pièce (10), et selon lequel le tranchant (16) est déplacé par rapport à la pièce (10) avec un mouvement d'avance dont la vitesse d'avance est nettement inférieure à la vitesse de coupe, de telle sorte que le point d'action entre le tranchant (16) et la pièce (10) se déplace le long du tranchant (16), **caractérisé en ce que** le tranchant (16) est déplacé avec un mouvement d'avance (f) en arc de cercle autour d'un axe de rotation (A₁) de l'outil, et **en ce que** le tranchant (16) présente la forme d'une hélice coaxiale à l'axe de rotation (A₁) de l'outil.

2. Procédé selon la revendication 1, **caractérisé en ce que** l'outil (12) est en outre pivoté d'un angle d'entrée pour l'approche radiale du tranchant (16) et d'un angle de sortie, afin que le tranchant (16) n'entre pas en collision avec la pièce (10) lors de l'approche radiale avant l'enlèvement de matière, et sorte de manière sûre de la coupe après l'enlèvement de matière.

3. Procédé selon la revendication 1 ou 2, **caractérisé en ce que** l'outil (12) est, pendant l'usinage rotatif avec sa vitesse d'avance nettement inférieure, pivoté d'un angle d'arc qui correspond à l'angle d'arc sur lequel s'étend le tranchant en forme d'hélice (16), et **en ce que** le point d'action du tranchant (16), en raison du mouvement de pivotement en arc de cercle du tranchant (16), se déplace en direction axiale sur la largeur du tranchant (16) pendant un mouvement de pivotement de l'outil (12).

4. Procédé selon la revendication 1, **caractérisé en ce que**, afin de produire des surfaces cylindriques rectilignes, l'axe de rotation de l'outil et l'axe de rotation de la pièce sont disposés parallèlement entre eux, et **en ce que** le tranchant présente la forme d'une hélice qui s'étend dans la surface latérale d'un cylindre.

5. Procédé selon la revendication 1, **caractérisé en ce que**, afin de produire des surfaces coniques, l'axe de rotation de l'outil et l'axe de rotation de la pièce sont disposés l'un par rapport à l'autre sous un angle compris entre 0° et 90°, et **en ce que** le tranchant présente la forme d'une hélice qui s'étend dans la surface latérale d'un cylindre.

6. Procédé selon la revendication 1, **caractérisé en ce que**, afin de produire des surfaces coniques, l'axe de rotation de l'outil et l'axe de rotation de la pièce sont disposés parallèlement entre eux, et **en ce que** le tranchant présente la forme d'une hélice qui s'étend dans la surface latérale d'un cône.

7. Procédé selon l'une des revendications 1 à 6, **caractérisé en ce que** l'outil agit par le tranchant sur la circonférence extérieure de la pièce.

8. Procédé selon l'une des revendications 1 à 6, **caractérisé en ce que** l'outil agit par le tranchant sur une circonférence intérieure de la pièce.

9. Procédé selon la revendication 1, **caractérisé en ce que**, afin de produire des surfaces planes perpendiculaires à l'axe de rotation de l'outil, l'axe de rotation de l'outil est disposé perpendiculairement à l'axe de rotation de la pièce.

10. Procédé selon l'une des revendications précédentes, **caractérisé en ce que** le pas de l'hélice du tranchant présente un angle de pas positif ou négatif par rapport à la direction d'avance du tranchant.

11. Dispositif pour l'usinage rotatif par enlèvement de matière de surfaces à symétrie de révolution (18, 20, 22) d'une pièce (10), avec un entraînement en rotation de la pièce serrée (10), sachant que la rotation de la pièce (10) produit la vitesse de coupe de l'usinage, avec un outil (12) doté d'un tranchant (16) et avec une avance de l'outil (12) dont la vitesse d'avance est nettement inférieure à la vitesse de coupe et par laquelle le tranchant (16) entre en engagement avec la pièce (10) par un point d'action se déplaçant le long du tranchant (16), **caractérisé en ce que** l'outil (12) peut être déplacé autour d'un axe de rotation (A₁) de l'outil, de sorte que le tranchant (16) est déplacé sur une trajectoire d'avance en arc de cercle (f), et **en ce que** le tranchant (16) présente la forme d'une hélice coaxiale à l'axe de rotation (A₁) de l'outil.

12. Dispositif selon la revendication 11, **caractérisé en ce que** l'outil (12) peut en outre être pivoté d'un angle d'entrée pour l'approche radiale du tranchant (16) et d'un angle de sortie.

13. Dispositif selon la revendication 11 ou 12, **caractérisé en ce que** l'outil (12) présente un bras d'outil (16), monté à pivotement en étant entraîné autour de l'axe de rotation (A₁) de l'outil et à l'extrémité libre duquel est disposé le tranchant (16).

14. Dispositif selon la revendication 11, **caractérisé en ce que** l'hélice présente un pas avec un angle de pas (β) compris entre 0° et 90°, de préférence entre 15° et 45°.

15. Dispositif selon la revendication 14, **caractérisé en ce que** l'angle de pas (β) est positif ou négatif par rapport à la direction d'avance (f).

16. Dispositif selon l'une des revendications 11 à 15, **caractérisé en ce que** le tranchant (16) présente la forme d'une hélice qui s'étend dans la face d'enveloppe d'un cylindre circulaire rectiligne de diamètre constant.

17. Dispositif selon l'une des revendications 11 à 15, **caractérisé en ce que** le tranchant (16) présente la forme d'une hélice qui s'étend dans la face d'enveloppe d'un cône.

18. Dispositif selon l'une des revendications 11 à 16, **caractérisé en ce que** l'axe de rotation (A₁) de l'outil et l'axe de rotation (A₂) de la pièce s'étendent parallèlement entre eux.

19. Dispositif selon l'une des revendications 11 à 17, **caractérisé en ce que** l'axe de rotation (A₁) de l'outil est incliné sous un angle compris entre 0° et 90° par rapport à l'axe de rotation (A₂) de la pièce.

20. Dispositif selon l'une des revendications 11 à 19, **caractérisé en ce que** le rayon (r₁) du mouvement d'avance en arc de cercle du tranchant (16) est inférieur au rayon (r₂) d'une surface intérieure à usiner de la pièce (10).

21. Dispositif selon l'une des revendications 11 à 20, **caractérisé en ce que** l'outil (12) peut être inséré par une unité d'entraînement (24) dans un logement d'outil entraîné d'un tour d'usinage.

22. Dispositif selon la revendication 21, **caractérisé en ce que** l'unité d'entraînement (24) présente un réducteur.

23. Dispositif selon l'une des revendications 11 à 22, **caractérisé en ce qu'**au moins un outil (12) est disposé sur le pourtour d'un porte-outil (32) en forme de disque circulaire rotatif autour de l'axe de rotation (A₁) de l'outil.

24. Dispositif selon la revendication 23, **caractérisé en ce que** l'outil au moins unique (12) est réalisé sous forme de cassette d'outil interchangeable (34).
